# EUROPÄISCHE PATENTANMELDUNG

(11) **EP 2 696 321 A1**
(43) Veröffentlichungstag der Anmeldung: **12.02.2014**
(21) Anmeldenummer: 12179579.3
(22) Anmeldetag: 07.08.2012
(51) Int. Cl.: G06Q 30/02, G06K 9/00

(54) **Verfahren und Vorrichtung zum Anzeigen von Werbespots**

(71) Anmelder: Playsys GmbH, 38118 Braunschweig (DE)
(72) Erfinder: Beddig, Jonathan, 38118 Braunschweig (DE); Börner, Simon, 38100 Braunschweig (DE)
(74) Vertreter: Müller Verweyen

(57) **Zusammenfassung**

Verfahren zum Anzeigen von Werbespots auf einer Bildschirmeinheit (1), wobei die Bildschirmeinheit (1) mindestens einen Bildschirm (2) und eine Kamera (3) aufweist, über die Echtdaten eines Bildschirmbetrachters ermittelt und in einer Datenbank gespeichert werden, und wobei die Anzahl der Bildschirmbetrachter, bezogen auf einzelne Werbespots, ermittelt und gespeichert wird. Weiterhin kann über ein Eingabemittel (5) eine Druckeinheit (4) dazu veranlasst werden, einen Ausdruck, z.B. einen Gutschein auszugeben, welcher einen Barcode und/oder einen RFID Chip umfasst. Am Eingabemittel kann ein Leuchtelement angeordnet sein, welches durch ein auf den Bildschirminhalt abgestimmtes optisches Signal auf die Ausdruckmöglichkeit hinweist.

## Beschreibung

Die Erfindung betrifft ein Verfahren zum Anzeigen von Werbespots auf einer Bildschirmeinheit mit den Merkmalen des Oberbegriffs von Anspruch 1 und eine entsprechende Vorrichtung zum Anzeigen von Werbespots mit den Merkmalen des Oberbegriffs von Anspruch 12.

Für Unternehmen stellt sich stets die Frage, wie effizient für die eigenen Produkte und Dienstleistungen geworben werden kann. Neben Printmedien stehen dafür bekannterweise auch digitale Werbeformen, wie beispielsweise Fernseh- oder Onlinewerbung, zur Verfügung.

Ein Problem der bekannten Werbeformen ist, dass sie einerseits teilweise an Bedeutung verlieren, da beispielsweise weniger Printmedien produziert werden, und es generell nicht nachvollziehbar ist, wie viele Menschen die Werbung tatsächlich erreicht.

Das Fehlen solcher Informationen führt zu Werbemaßnahmen, die flächenartig möglichst viele Menschen erreichen sollen. Jedoch kann solch breite Werbung naturgemäß nicht alle Geschmäcker unterschiedlicher Menschen gleich stark ansprechen.

Wie sehr sich beispielsweise der einzelne Betrachter von einem Werbespot angesprochen fühlt, kann lediglich rückwirkend mittels Befragung oder über Versuchsgruppen abgeschätzt werden. Einen solchen Marktforschungsaufwand kann bzw. will jedoch nicht jeder Unternehmer betreiben.

Um Werbeinhalte speziell auf den Betrachter abzustimmen, ist es zudem aus der Druckschrift DE 20 2009 000 392 U1 bekannt, die darzustellenden Werbeinhalte mittels vordefinierter Personenprofile gezielt auszuwählen. Mittels einer Sensoreinheit kann ermittelt werden, welche Art von Betrachtertyp gerade zugegen ist und der Werbeinhalt kann auf diesen Betrachter abgestimmt werden.

Ob die einzelnen Betrachter jedoch tatsächlich von den Werbeinhalten angesprochen werden, kann auf diese Weise nicht ermittelt werden. Die Inhalte sind vordefiniert und in der Regel gibt es nur eine bestimmte Wahrscheinlichkeit, dass der Betrachter die Werbung tatsächlich wahrnimmt bzw. sich für die Werbung interessiert.

Zudem ist das Platzieren von Werbeinhalten insbesondere für kleine Unternehmen und/oder Handelsbetriebe, wie beispielsweise lokale Fleischer oder Bäcker, schwierig. Denn eine groß angelegte Werbekampagne steht oft nicht im Verhältnis zu dem finanziellen Aufwand und kleine Werbekampagnen erreichen zu wenige bzw. nicht die gewünschten Personenkreise. Es fehlt also an effizienten Werbungsformen, die bei geringem Aufwand vergleichsweise viele Menschen nachvollziehbar erreicht.

Der Erfindung liegt somit die Aufgabe zugrunde, ein Verfahren und eine Vorrichtung zum Anzeigen von Werbeinhalten zu schaffen, bei denen die beschriebenen Probleme reduziert sind.

Zur Lösung der Aufgabe wird erfindungsgemäß ein Verfahren zum Anzeigen von Werbespots auf einer Bildschirmeinheit vorgeschlagen, wobei die Bildschirmeinheit mindestens einen Bildschirm und eine Kamera aufweist, über die Echtdaten eines Bildschirmbetrachters ermittelt und in einer Datenbank gespeichert werden und wobei die Anzahl der Bildschirmbetrachter bezogen auf einzelne Werbespots ermittelt und gespeichert wird.

Durch das Ermitteln der Information, wie viele Bildschirmbetrachter den Werbespot gesehen haben, ist es möglich nachzuvollziehen, wie viele Menschen die einzelnen Werbespots tatsächlich erreicht haben.

Zudem werden beispielsweise Geschäftsmethoden zum Anbieten von Werbung ermöglicht, bei denen nach Anzahl der Betrachter differenziert werden kann. Anstatt Werbung großflächig zu verbreiten, ohne Kenntnis, ob sie tatsächlich gesehen wird, können durch das erfindungsgemäße Verfahren viel effizienter Werbungsinhalte platziert werden.

Vorzugsweise wird auch die Zeitdauer, die der Bildschirmbetrachter einen Werbespot betrachtet, ermittelt und gespeichert. Durch die Information der Betrachtungszeit, bezogen auf einzelne Werbespots, kann noch effizienter ausgewertet werden, wie gut und ansprechend einzelne Werbespots sind. Es werden dadurch beispielsweise Geschäftsmodelle ermöglicht, bei denen die tatsächlich gesehene Werbezeit angeboten und abgerechnet werden kann.

Dabei kann es bevorzugt sein, dass ein Werbespot anhand der ermittelten Echtdaten ausgewählt und angezeigt wird. Es können jedoch auch Werbeinhalte ohne besonderen Bezug zu dem Betrachter dargestellt werden.

Anhand von Echtdaten der Betrachter kann ausgewertet werden, welche Altersgruppen welche Werbespots bevorzugt ansehen. Dazu wird vorzugsweise das Alter des Bildschirmbetrachters ermittelt und gespeichert. Die Altererkennung erfolgt nach bekannten Methoden zur Altererkennung, wobei auch Altersgruppen, beispielsweise Altersgruppe "20 bis 29 Lebensjahre", ermittelt werden.

Vorzugsweise wird das Geschlecht des Bildschirmbetrachters ermittelt und gespeichert. Auf diese Weise kann ermittelt werden, ob einzelne Werbespots eher Frauen oder Männer ansprechen und besondere Werbespots angezeigt werden, die beispielsweise hauptsächlich Frauen ansprechen.

Vorzugsweise werden Gegenstands- und/oder Kleidungsmerkmale des Bildschirmbetrachters ermittelt und gespeichert. Einerseits kann über das Ermitteln von Kleidungsstilen Rückschluss auf Zugehörigkeitsgruppen gewonnen werden. Beispielsweise können Krawatten- oder Jeansträger identifiziert werden. Zudem ist es möglich anhand der ermittelten Kleidungsmerkmale Werbung zu passender Kleidung anzuzeigen. Entsprechendes gilt für Gegenstandsmerkmale, wie beispielsweise getragener Schmuck, tragbare elektrische Geräte, insbesondere Mobilfunkgeräte oder sonstige für die Kamera sichtbare Gegenstände des Betrachters. Dabei ist es bevorzugt, wenn beispielsweise Herstellerinformationen eines Gegenstands, beispielsweise Logos oder Marken erkannt werden. Auf Basis der ermittelten Gegenstandsmerkmale können bestimmte Werbespots oder Werbeinhalte automatisch angezeigt werden.

Dies kann in einer bevorzugten Ausgestaltung der Erfindung unter Zuhilfenahme von "erweiterter Realität" (augmented reality) geschehen. Dabei wird der Betrachter im Bildschirm dargestellt und zusätzlich werden beworbene Produkte, beispielsweise Kleidungsstücke, eingeblendet, so dass der Betrachter einen Eindruck davon bekommt, wie er mit den beworbenen Kleidungsstücken aussehen würde.

Vorzugsweise wird über eine mit der Bildschirmeinheit verbundene Druckeinheit ein auf den angezeigten Werbespot und/oder auf die ermittelten Echtdaten des Betrachters abgestimmter Ausdruck erzeugt. Durch das Erzeugen eines Ausdrucks kann dem Betrachter eine Erinnerungsstütze an den gesehenen Werbespot zur Verfügung gestellt werden. Zudem ist die Information, dass ein Betrachter nicht nur den Werbespot gesehen hat, sondern auch von der Werbung dazu veranlasst wurde, einen Ausdruck mitzunehmen, wertig und kann entsprechend ausgewertet werden. Das Benutzen der Ausdrucksfunktion lässt darauf schließen, dass die Werbung geeignet war, den Betrachter anzusprechen.

Die Vorrichtung weist somit vorzugsweise eine Druckeinheit und ein Eingabemittel auf, wobei die Vorrichtung dazu eingerichtet ist, nach einer Betätigung des Eingabemittels automatisch einen auf den angezeigten Werbespot und/oder auf die ermittelten Echtdaten des Betrachters abgestimmten Ausdruck auszugeben.

Der Ausdruck kann als einfache Erinnerung mit einem Photo oder Schriftzug versehen sein. In einer bevorzugten Ausführungsform der Erfindung ist der Ausdruck als Gutschein ausgeführt. Der Gutschein weist vorzugsweise eine Nummer oder einen Barcode, der auf das beworbene Produkt bezogen ist, auf. Zudem kann es auch bevorzugt sein, dass der Ausdruck einen RFID (radiofrequency identification) Chip umfasst. Zur Rückerfassung des ausgegebenen RFID Chips kann die Bildschirmeinheit auch eine RFID-Einheit umfassen.

Durch die RFID-Einheit können berührungslos die Daten des Gutscheins zurückerfasst werden. Beispielsweise kann durch Heranhalten des Gutscheins in den Bereich der RFID-Einheit die Werbung zu dem Produkt erneut abgespielt werden. Weiter bevorzugt ist die Wiedergabe auch auf anderen, vorzugsweise mit der ersten Bildschirmeinheit vernetzten, Bildschirmeinheiten möglich.

Die Druckeinheit kann neben oder abgesetzt von der Bildschirmeinheit platziert sein, es ist jedoch bevorzugt, dass die Druckeinheit in der Bildschirmeinheit integriert ist und die Bildschirmeinheit ein Eingabemittel aufweist, durch dessen Betätigung der Ausdruck erzeugt wird. Das Eingabemittel ist bevorzugt als Knopf ausgeführt, durch dessen Betätigung der Ausdruck erzeugt wird.

Um auf die Möglichkeit des Ausdrucks hinzuweisen, ist am Eingabemittel vorzugsweise ein Leuchtelement angeordnet, welches ein mit dem Bildschirminhalt abgestimmtes optisches Signal ausgibt. Beispielsweise kann das als Knopf ausgeführte Eingabemittel in einer Frequenz blinken, die mit dem auf dem Bildschirm dargestellten Werbeinhalt abgestimmt ist. In einer Ausführungsform blinkt auf dem Bildschirm ein Hinweis auf den Ausdruck in derselben Frequenz wie das Leuchtelement am Eingabemittel. Die Blinkfrequenz kann beispielsweise ca. 130 Wiederholungen pro Minute sein und sanft ein- bzw. ausblenden.

Vorzugsweise weist die Bildschirmeinheit eine Netzwerkverbindung auf, über die die Bildschirmeinheit mit einem Webserver in Verbindung steht. Dabei sind über den Webserver vorzugsweise Werbespots zur Anzeige auf einem oder mehreren Bildschirmeinheiten einstellbar. Durch die Vernetzung können Werbeinhalte zentral gesteuert und auf die einzelnen Bildschirmeinheiten gezielt verteilt werden.

Durch die Vernetzung der Bildschirmeinheiten können die Betreiber der Bildschirmeinheiten in einfacher Weise die Werbeinhalte erstellen. Die Betreiber sind nicht zwangsläufig auf besondere Werbeagenturen angewiesen, sondern können bevorzugt mittels bekannter Webbrowser die Einstellung für ihre Bildschirmeinheiten vornehmen.

Weiterhin ist es bevorzugt, dass verschiedene Bildschirmbetreiber Werbeinhalte über die Vernetzung austauschen bzw. platzieren können. Beispielsweise können verschiedene Unternehmen sich gegenseitig Werbezeit zur Verfügung stellen. Ein mögliches Beispiel wären ein Bäcker und ein Fleischer, die beide lokale Werbung betreiben möchten und sich daher gegenseitig Werbezeit für die in ihrem Verkaufsbereich platzierten Bildschirmeinheiten einräumen.

In einer Ausführungsform der Erfindung können die Bildschirmbetreiber sich über ein eigens dafür vorgesehenes soziales Netzwerk verbinden. Es kann jedoch auch auf etablierte soziale Netzwerke zurückgegriffen werden.

Die Betreiber der Bildschirmeinheiten haben durch das Einbinden eines sozialen Netzwerks die Möglichkeit, in einfacher und gezielter Weise Kenntnis von platzierten Bildschirmeinheiten zu erlangen und sich mit den jeweiligen Betreibern über eine Nutzung auszutauschen.

Zur Lösung der Aufgabe wird neben dem beschriebenen Verfahren erfindungsgemäß auch eine Vorrichtung mit einer Bildschirmeinheit zum Anzeigen von Werbespots vorgeschlagen, wobei die Bildschirmeinheit mindestens einen Bildschirm und eine Kamera aufweist und die Vorrichtung zur Durchführung des zuvor beschriebenen Verfahrens eingerichtet ist.

Die Erfindung wird im Folgenden anhand bevorzugter Ausführungsformen unter Bezugnahme auf die beigefügten Figuren erläutert. Dabei zeigt:

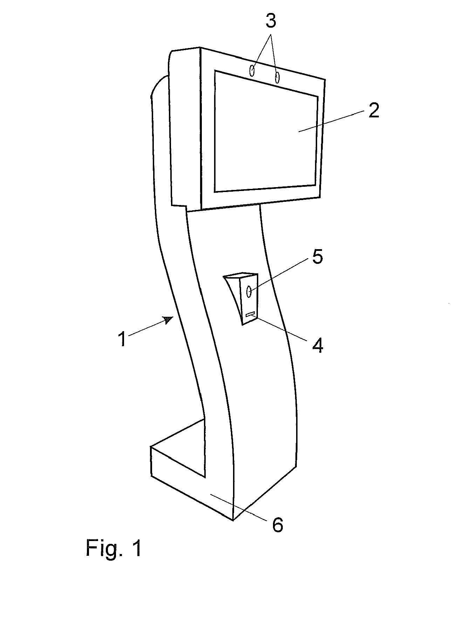

- Fig. 1: eine isometrische Darstellung einer erfindungsgemäßen Vorrichtung mit einer Bildschirmeinheit zum Anzeigen von Werbeinhalten.

Die Figur 1 zeigt eine bevorzugte Ausgestaltungsform einer erfindungsgemäßen Vorrichtung mit einer Bildschirmeinheit 1 zum Anzeigen von Werbeinhalten, beispielsweise verschiedene Werbespots. Die Bildschirmeinheit 1 wird von einem Betreiber beispielsweise in seinem eigenen Unternehmen aufgestellt, um Werbung für bestimmte eigene oder fremde Produkte zu machen.

Die Bildschirmeinheit 1 umfasst hier eine Bodenplatte 6, auf der ein S-förmig geschwungener, im Querschnitt im Wesentlichen rechteckiger Hauptkörper fußt. In einer für den durchschnittlichen Betrachter gut sichtbaren Höhe ist ein Bildschirm 2 angeordnet. Oberhalb des Bildschirms 2 sind zwei Kameras 3 vorgesehen.

Zusätzlich umfasst die Bildschirmeinheit 1 in diesem bevorzugten Ausführungsbeispiel eine Druckeinheit 4 und ein als Knopf ausgeführtes Eingabemittel 5 mit einem Leuchtmittel, welche unterhalb des Bildschirms 2 angeordnet sind und sich auf einer Höhe befinden, die für einen Betrachter mit der Hand einfach zugänglich ist.

Über eine nicht dargestellte Netzwerkverbindung ist die Bildschirmeinheit 1 mit einem nicht dargestellten Webserver verbunden. Über diesen Webserver werden die Werbeinhalte eingestellt, die auf dem Bildschirm 2 der Bildschirmeinheit 1 angezeigt werden. Der Betreiber der Bildschirmeinheit 1 hat über den Webserver die Möglichkeit, die Bildschirmeinheit 1 an- und abzuschalten, bei Bedarf kann auch nur der Bildschirm 2 an- oder abgeschaltet werden. Er kann die beschriebenen Bildschirmfunktionen überwachen oder auch noch weitere Funktionen der Bildschirmeinheit administrieren. Zudem kann es auch möglich sein, bei einem Notfall besondere Inhalte zu senden. Dabei wird beispielsweise bei nicht gewünschten Inhalten oder bei technischen Problemen eine vorzugsweise automatische Kaschierung des Bildschirms 2 vorgenommen. Dieser Notfallinhalt wird vorzugsweise zentral über den Webserver gesteuert und kann auf mehreren Bildschirmeinheiten 1 gleichzeitig angezeigt werden. Dabei wird die Anzeige von laufenden Werbeinhalten gestoppt und der Notfallinhalt unverzüglich angezeigt, sobald er ausgelöst wurde.

In einer bevorzugten Ausführungsform wird die automatische Darstellung eines Notfallinhalts automatisch ausgelöst, bevor bzw. wenn ein inakzeptabler Werbespot gesendet wird. Inakzeptable Werbespots sind beispielsweise solche, die gegen geltende Nutzungsbedingungen verstoßen. Insbesondere ist es bevorzugt durch die Notfallfunktion die Darstellung von gefährlichen und provozierenden Inhalten auszuschließen. Sobald ein derartiger Werbespot beispielsweise anhand von vordefinierten Kriterien automatisch oder manuell ermittelt ist, wird die Ausstrahlung durch den Notfallinhalt kaschiert, so dass der Betrachter den gefährlichen oder provozierenden Inhalt nicht wahrnimmt.

In einer anderen Ausführungsform der Erfindung wird ein bestimmter unerwünschter Werbespot administrativ aus dem System entfernt. Es folgt eine automatische Benachrichtigung an die betroffenen Bildschirmeinheiten 1 bzw. an die Betreiber der betroffenen Bildschirmeinheiten 1. Es wird zudem automatisch eine neue Abspielreihenfolge eingestellt, in der der unerwünschte Werbespot nicht mehr vorgesehen ist. Vorzugsweise erfolgt dieses Herausnehmen des Werbespots innerhalb von 5 min, weiter bevorzugt innerhalb von 1 bis 2 min.

Für den Fall, dass der unerwünschte Werbeinhalt nicht entfernt werden kann, weil beispielsweise die Software mit einer Störung behaftet ist, wird unmittelbar ein Notfallinhalt auf der Bildschirmeinheit gestartet. Dabei ist es bevorzugt, dass die mit einer Störung behaftete Darstellungssoftware, beispielsweise ein sog. "Flashplayer" mit der die Werbeinhalte auf der Bildschirmeinheit dargestellt werden, automatisch beendet wird. Beim Beenden der Darstellungssoftware wird auf der Bildschirmeinheit 1 dann ein Notfallinhalt angezeigt, es erfolgt kein weiteres Darstellen der Werbeinhalte. Sobald die Darstellungssoftware wieder problemlos funktioniert, wird das Anzeigen der Werbeinhalte fortgesetzt. Das Beenden der Darstellungssoftware und Anzeigen des Notfallinhalts erfolgt vorzugsweise in weniger als einer Minute.

Demnach ist es bevorzugt, dass hinterlegte Notfallinhalte entweder automatisch oder manuell auf bestimmten Bildschirmeinheiten angezeigt werden können. Die Abspielreihenfolge wird entweder geändert, so dass der unerwünschte Inhalt übersprungen wird, oder die Darstellungssoftware wird beendet und ein, vorzugsweise lokal auf der Bildschirmeinheit gespeicherter, Notfallinhalt wird dargestellt.

Über die Kameras 3 und eine mit der Kamera 3 verbundene Software werden Echtdaten des Betrachters ermittelt und gespeichert. Beispielsweise werden Alter, Geschlecht und Kleidungsmerkmale ermittelt.

Die Anzahl der Betrachter und die zugehörige Betrachtungszeit, in der der oder die Betrachter den Bildschirm 2 tatsächlich ansehen, werden ermittelt und gespeichert. Diese Daten können auch über den Webserver verwaltet und beispielsweise für eine Zusammenfassung abgerufen werden. Die Information über Betrachteranzahl und Betrachtungszeit werden vorzugsweise mittels Blickerfassungsverfahren ermittelt, die softwaregesteuert in der Bildschirmeinheit und/oder in dem Webserver automatisch ablaufen.

Über den Webserver kann die Bildschirmeinheit 1 zudem so eingestellt werden, dass sie für bestimmte Personen bzw. Personengruppen bestimmte Werbespots anzeigt.

In einem Werbespot wird vorzugsweise ein blinkender Hinweis angezeigt, mit dem der Betrachter auf die Möglichkeit eines Ausdrucks hingewiesen werden soll. Beispielsweise blinkt der Hinweis in einer bestimmten Frequenz synchron zusammen mit dem Leuchtmittel im oder am Eingabemittel 5.

Intuitiv registriert der Betrachter, dass er nur das als Knopf ausgeführte Eingabemittel 5 zu drücken braucht, um einen Ausdruck für den Werbespot zu erlangen. Alternativ oder zusätzlich kann auch auf dem Bildschirm 2 ein Hinweis in Textform auf dem Ausdruck vorgesehen werden.

Es kann sich bei dem Ausdruck auch vorzugsweise um einen Gutschein handeln, der bevorzugt für das auf dem Bildschirm 2 beworbene Produkt vorgesehen ist.

Der Ausdruck wird von der Druckeinheit 4 erzeugt und für den Betrachter ausgegeben.

Das Blinken des Leuchtmittels und die Möglichkeit der Ausdruckserzeugung erlöschen nach vollzogenem Ausdruck für ca. 1 Sekunde, um ein mutwilliges Repetieren des Eingabemittels 5 durch den Betrachter einzuschränken. Ist nach Ablauf der Sperrzeit der Werbespot noch aktiv, kann der Knopf durch erneutes Blinken zum Ausdruck auffordern.

Wenn Werbespots auf dem Bildschirm 2 angezeigt werden, für die keine Ausdrucksfunktion vorgesehen sein soll, wechselt das Blinken in ein statisches Leuchten. Beim Drücken des Knopfes in diesem Zustand wird vorzugsweise ein Standardinhalt ausgegeben. Beispielsweise wird eine Standardnachricht auf dem Bildschirm 2 angezeigt, die auf das Fehlen der Ausdrucksfunktion hinweist, und/oder ein Standardausdruck wird erzeugt, der nicht auf den gerade angezeigten Werbespot abgestimmt ist.

Es besteht bei der Bildschirmeinheit 1 zudem die Möglichkeit, dass der Betrachter für bestimmte Werbezwecke auf dem Bildschirm 2 in einer "erweiterten" Realität dargestellt wird. Dabei werden beispielsweise Kleidungsstücke eingeblendet, so dass der Betrachter, ohne selbst eine Kleidungswahl treffen zu müssen und ohne Kleidungsstücke anprobieren zu müssen, bewerten kann, ob das Aussehen der Kleidungsstücke ihm gefällt.

Bei Gefallen kann er beispielsweise über die Ausdrucksfunktion ein Farbbild von sich in dem beworbenen Kleidungsstück mitnehmen und braucht dies beispielsweise nur einem Verkäufer zu geben, der ihm das beworbene Kleidungsstück heraussucht.

Der Betreiber der Bildschirmeinheit 1 kann die gesammelten Informationen über die Anzahl der Bildschirmbetrachter, Alter, Geschlecht, etc., bezogen auf die angezeigten Werbespots, auswerten und so die Werbungsanzeige optimieren.

Beispielsweise kann er die Bildschirmeinheit so programmieren, dass zu bestimmten Tageszeiten ausgewählte Werbung für bestimmte Altersgruppen angezeigt wird, wenn durch die gesammelten Daten ersichtlich ist, dass zu dieser Tageszeit besonders viele Personen dieser Altersgruppe zugegen sind.

### Bezugszeichenliste:

- 1: Bildschirmeinheit
- 2: Bildschirm
- 3: Kamera
- 4: Druckeinheit
- 5: Eingabemittel
- 6: Bodenplatte

## Patentansprüche

1. Verfahren zum Anzeigen von Werbespots auf einer Bildschirmeinheit (1), wobei die Bildschirmeinheit (1) mindestens einen Bildschirm (2) und eine Kamera (3) aufweist, über die Echtdaten eines Bildschirmbetrachters ermittelt und in einer Datenbank gespeichert werden, **dadurch gekennzeichnet, dass** die Anzahl der Bildschirmbetrachter, bezogen auf einzelne Werbespots, ermittelt und gespeichert wird.

2. Verfahren nach Anspruch 1, **dadurch gekennzeichnet, dass** die Zeitdauer, die der Bildschirmbetrachter einen Werbespot betrachtet, ermittelt und gespeichert wird.

3. Verfahren nach einem der vorangegangenen Ansprüche, **dadurch gekennzeichnet, dass** das Geschlecht des Bildschirmbetrachters ermittelt und gespeichert wird.

4. Verfahren nach einem der vorangegangenen Ansprüche, **dadurch gekennzeichnet, dass** Gegenstands- und/oder Kleidungsmerkmale des Bildschirmbetrachters ermittelt und gespeichert werden.

5. Verfahren nach einem der vorangegangenen Ansprüche, **dadurch gekennzeichnet, dass** das Alter des Bildschirmbetrachters ermittelt und gespeichert wird.

6. Verfahren nach einem der vorangegangenen Ansprüche, **dadurch gekennzeichnet, dass** über eine mit der Bildschirmeinheit (1) verbundene Druckeinheit (4) ein auf den angezeigten Werbespot und/oder auf die ermittelten Echtdaten des Betrachters abgestimmter Ausdruck erzeugt wird.

7. Verfahren nach Anspruch 6, **dadurch gekennzeichnet, dass** die Druckeinheit (4) in der Bildschirmeinheit (1) integriert ist und die Bildschirmeinheit ein Eingabemittel (5) aufweist, durch dessen Betätigung der Ausdruck erzeugt wird.

8. Verfahren nach Anspruch 7, **dadurch gekennzeichnet, dass** am Eingabemittel (5) ein Leuchtelement angeordnet ist, welches ein mit dem Bildschirminhalt abgestimmtes optisches Signal ausgibt.

9. Verfahren nach einem der vorangegangenen Ansprüche, **dadurch gekennzeichnet, dass** ein Werbespot anhand der ermittelten Echtdaten ausgewählt und angezeigt wird.

10. Verfahren nach einem der vorangegangenen Ansprüche, **dadurch gekennzeichnet, dass** die Bildschirmeinheit (1) eine Netzwerkverbindung aufweist, über die die Bildschirmeinheit (1) mit einem Webserver in Verbindung steht.

11. Verfahren nach Anspruch 10, **dadurch gekennzeichnet, dass** über den Webserver Werbespots zur Anzeige auf einer oder mehrerer Bildschirmeinheiten (1) einstellbar sind.

12. Vorrichtung mit einer Bildschirmeinheit (1) zum Anzeigen von Werbespots, wobei die Bildschirmeinheit (1) mindestens einen Bildschirm (2) und eine Kamera (3) aufweist und die Vorrichtung zur Durchführung eines Verfahrens gemäß einem der Ansprüche 1 bis 11 eingerichtet ist.

13. Vorrichtung zum Anzeigen von Werbespots nach Anspruch 12, **dadurch gekennzeichnet, dass** die Vorrichtung eine Druckeinheit (4) und ein Eingabemittel (5) aufweist, wobei die Vorrichtung dazu eingerichtet ist, nach einer Betätigung des Eingabemittels (5) automatisch einen auf den angezeigten Werbespot und/oder auf die ermittelten Echtdaten des Betrachters abgestimmten Ausdruck auszugeben.
